# FASCICULE DE BREVET EUROPEEN

(11) **EP 1 138 133 B1**
(45) Date de publication et mention de la délivrance du brevet: **13.11.2002**
(21) Numéro de dépôt: 00951599.0
(22) Date de dépôt: 16.06.2000
(51) Int. Cl.: H04H 9/00, H04N 7/24

(54) **PROCEDE ET DISPOSITIF POUR L'IDENTIFICATION D'UNE CHAINE DE TELEVISION SELECTIONNEE PAR UN DECODEUR OU RECEPTEUR/DECODEUR NUMERIQUE**
VERFAHREN UND VORRICHTUNG FÜR DIE ERFASSUNG EINES EINGESCHALTETEN FERNSEHPROGRAMMS IN EINEM DIGITALEN FERNSEHEMPFÄNGER BZW. IN EINEM DIGITALEN DEKODER
METHOD FOR IDENTIFYING, WITH A USER DEVICE SUCH AS AN AUDIENCE-RATER, A TELEVISION CHANNEL SELECTED BY A DIGITAL DECODER OR RECEIVER/DECODER

(30) Priorité: 17.06.1999 FR 9907676
(43) Date de publication de la demande: 04.10.2001
(73) Titulaire: Mediametrie Cabsat (Sociéte Anonyme), 92300 Levallois Perret (FR)
(72) Inventeur: LAURES, Antoine, F-75015 Paris (FR); GIROUX, Pascal, F-78210 Saint Cyr l'Ecole (FR)
(74) Mandataire: Lang, Johannes
(86) Numéro de dépôt international: FR0001675
(87) Numéro de publication internationale: WO00079716

(56) Documents cités:
- EP-A- 0 830 028
- WO-A-95/08242
- WO-A-96/19079
- DE-A- 19 626 907
- GB-A- 2 329 736
- US-A- 4 584 602

## Description

La présente invention concerne l'identification des programmes de télévision sélectionnés par un équipement tel que décodeur (ou récepteur/décodeur) numérique, associé à un téléviseur ou un enregistreur vidéo.

L'identification d'un programme ― c'est-à-dire le médium véhiculant l'image et le son ― est en particulier utile dans le domaine de l'audimétrie, c'est-à-dire de la mesure d'audience. En effet, il est essentiel de pouvoir identifier à tout instant, à des fins statistiques, à quelle chaîne ― c'est-à-dire l'entité qui a produit le contenu de ce qui est véhiculé par le programme ― correspond le programme regardé (ou enregistré) à un instant donné dans le foyer objet de l'enquête.

Cette application à l'audimétrie n'est toutefois pas limitative, et l'on comprendra que l'invention pourra être utilisée à d'autres fins, par exemple pour la visualisation ou la mémorisation (par exemple pendant un enregistrement) en clair de la chaîne du programme regardé à un instant donné.

Un décodeur ou récepteur/décodeur (souvent désigné "IRD", *Integrated Receiver-Decoder*) se présente généralement sous forme d'un boîtier connecté au réseau de diffusion de télévision numérique, que cette diffusion soit opérée par câble, par satellite ou bien par voie hertzienne.

Le boîtier permet, outre la réception, la démodulation et le démultiplexage des signaux reçus, d'accomplir un certain nombre de fonctions non prévues par le téléviseur, notamment le contrôle de l'accès aux services (gestion des abonnements, paiement à la séance, etc.) et l'interfaçage avec une voie de retour vers le gestionnaire du réseau via une ligne téléphonique raccordée au décodeur.

En sortie, le décodeur est relié au téléviseur ou au magnétoscope au moyen d'interfaces standard, ainsi qu'au réseau téléphonique pour la gestion de la voie de retour.

Le GB-A-2 329 736 (NDS Ltd) décrit, par exemple, un tel récepteur-décodeur.

Lorsque l'on souhaite, à des fins audimétriques, identifier le programme regardé ou enregistré par l'abonné, une première solution consiste à reconnaître la fréquence porteuse (ou canal) du programme sélectionné par le décodeur, et à identifier la chaîne à partir d'une table de correspondance fréquences/chaînes mémorisée dans l'audimètre.

Cette solution est cependant assez délicate à mettre en oeuvre, car la programmation de la table de correspondance est propre à un réseau à un instant donné; Il est donc nécessaire de programmer autant de tables différentes que de réseaux et, d'autre part, de reprogrammer toutes les tables à chaque changement du plan de fréquences du réseau, ou à chaque ajout de nouveaux programmes.

Au surplus, la technique consistant à analyser la fréquence porteuse ou le numéro de canal est une technique insuffisante dans le cas de la télévision numérique, car plusieurs programmes (ou services) différents sont multiplexés dans un même canal.

L'identification de la chaîne peut être opérée, de manière connue, en prélevant au sein de l'équipement une donnée numérique formant identifiant de chaîne, donnée véhiculée par le signal vidéo regardé sur l'équipement. Les EP-A-0 830 028 (Médiamétrie SA) et US-A-4 584 602 (Pioneer Ausaphone Mfg Corp.) décrivent cette technique d'identification, appliquée au cas où l'équipement est un téléviseur. Mais cette technique est prise en défaut dans le cas d'un signal vidéo délivré par un iRD car un signal de télévision numérique ne comporte pas de lignes de retour de trame; il comporte seulement les informations de vidéo du signal d'image, du son numérisé, et un certain nombre de données.

Une autre technique d'identification de la chaîne consiste à procéder de manière différée et indirecte, en enregistrant des échantillons du son et/ou de l'image du programme de télévision délivré par le décodeur, ainsi qu'une information de repérage temporel de l'instant d'échantillonnage.

Ces diverses informations sont conservées localement et ensuite transmises et analysées au centre de calcul de l'opérateur d'audimétrie, en les corrélant à des enregistrements effectués aux mêmes moments des programmes des diverses chaînes, de manière à identifier ainsi la chaîne correspondant à ce programme.

Cette technique est peu intrusive à l'égard du décodeur (il suffit d'enregistrer le signal délivré par la sortie vidéo), en revanche elle est extrêmement lourde à mettre en oeuvre, exige des puissances de calcul importantes et nécessite une mémoire locale ou une connexion fréquente de l'audimètre à son système de collecte. Enfin, la corrélation n'est jamais obtenue à 100 %, de sorte qu'il existe toujours une fraction d'échantillons pour lesquels il n'est pas possible d'identifier la chaîne regardée.

L'un des buts de l'invention est de proposer un procédé d'identification adéquat de la chaîne sélectionnée par un décodeur numérique, qui s'affranchisse de l'ensemble de ces inconvénients.

La démarche proposée par l'invention consiste, pour identifier la chaîne sélectionnée, à analyser, au sein du décodeur, des informations numériques d'identification de la chaîne accompagnant le signal vidéo numérique, et à transmettre cette information d'identification de la chaîne par une liaison informatique entre le décodeur et l'audimètre, afin que ce dernier soit informé par le décodeur de tout changement de chaîne.

L' invention propose à cet effet d'utiliser le procédé, connu d'après les EP-A-0 830 028 et US-A-4 584 602 précédés, consistant à prélever au sein d'un équipement une donnée numérique formant identifiant de chaîne.

Pour adapter ce procédé au cas où l'équipement est un décodeur ou récepteur/décodeur numérique, l'invention propose de mettre en oeuvre les étapes énoncées à la partie caractérisante de la revendication 1.

Les sous-revendications 2 à 9 visent des mises en oeuvre avantageuses de ce procédé.

L'invention porte également sur un signal numérique d'identification de chaîne, considéré en tant que tel, et utilisé dans le cadre du procédé ci dessus. Les caractéristiques de ce signal selon l'invention sont enoncées dans les revendications 10 à 14.

On va maintenant donner un exemple détaillé de mise en oeuvre de l'invention, bien entendu sans caractère limitatif.

Cette mise en oeuvre sera dans cet exemple réalisée par des moyens entièrement logiciels, ce qui permet notamment d'utiliser des décodeurs préexistants sans avoir à intervenir sur ceux-ci autrement que par chargement d'un logiciel particulier que l'on désignera "logiciel audimétrique".

Ce logiciel audimétrique peut être chargé en même temps que le logiciel de pilotage général du décodeur (essentiellement le logiciel de contrôle d'accès et les pilotes d'interfaçage), ou même téléchargé, par exemple via la liaison téléphonique dont est pourvue le décodeur ou par le réseau de diffusion. Le logiciel audimétrique peut être également incorporé systématiquement à tous les décodeurs et n'être activé qu'en cas de besoin, cette activation pouvant être réalisée par simple envoi d'un signal à distance.

Pour la communication avec l'audimètre, ce dernier peut être avantageusement raccordé à des prises préexistantes du décodeur, telles que port série ou port parallèle (ports en pratique très rarement utilisés simultanément par les téléspectateurs), ou même éventuellement à une prise "sortie audio" du décodeur, ou encore en dérivation sur le connecteur de carte à microcircuit.

De cette manière, il n'est pas nécessaire d'ajouter d'éléments matériels supplémentaires, ni de logiciel supplémentaire pour piloter ces éléments matériels ajoutés.

De plus, le logiciel de l'invention peut avantageusement utiliser des interfaces informatiques standard, telles que les interfaces API (*Application Programming Interface)* existant déjà au sein du logiciel de pilotage général du décodeur.

Avantageusement, le décodeur communique avec l'audimètre de façon unidirectionnelle.

En effet, pour ne pas perturber ou ralentir le fonctionnement du décodeur, il est souhaitable que le logiciel audimétrique du décodeur ne se mette jamais à l'écoute de l'audimètre raccordé à ce décodeur. Le logiciel audimétrique analysera donc lui-même, localement, les signaux produits au sein du décodeur et formatera à sa propre initiative un message à destination de l'audimètre distant, branché sur le décodeur.

Ce logiciel audimétrique embarqué à l'intérieur du décodeur est activé dans deux cas distincts :
- lors de chaque changement de chaîne ou de condition d'accès au programme choisi (la "condition d'accès" se réfère aux programmes à accès conditionnel tels que programmes cryptés ou en clair selon les heures, programmes avec abonnements ne permettant la visualisation d'un programme qu'à certaines heures et non à d'autres, paiement à la séance autorisé ou bien dont les droits sont épuisés, etc.), et
- lors du passage du décodeur du mode actif au mode de veille (ou d'extinction).

Le logiciel audimétrique permet tout d'abord de prélever à l'intérieur du décodeur les informations pertinentes en terme d'audimétrie, et de formater un message contenant ces informations et destiné à l'audimètre.

Dans chacun des deux cas évoqués ci-dessus, par l'intermédiaire des interfaces API standard du décodeur le logiciel audimétrique enverra un message spécifique sur l'interface de communication choisie pour la liaison avec l'audimètre.

Ces messages sont de deux types :
- un premier type, que l'on appellera "type 1", en cas de changement de chaîne ou de changement de condition d'accès à la chaîne ;
- un second type, que l'on appellera "type 2" en cas de passage en veille ou de réveil de décodeur (ou d'extinction ou d'allumage).
Ils sont formatés de la manière que l'on va décrire.

### Messages de type 1 : données audimétriques

Le message de type 1 est émis à chaque changement de programme ou de condition d'accès au programme ou, optionnellement, de façon périodique en l'absence d'un tel changement (par exemple chaque minute). Il a une longueur nominale de 52 octets.

Le message proprement dit (message utile) est précédé d'un préfixe comprenant :
- un motif de synchronisation ou "tag" de début, codé sur 8 octets, permettant de reconnaître que le message qui va suivre est un message destiné à un audimètre (ce motif est arbitraire, mais constant),
- un identifiant de message, sur un octet, indiquant le type de message : ici, un message de type 1.
Le message proprement dit, qui suit ce préfixe, permet d'identifier la chaîne et les conditions d'accès qui prévalent à l'instant considéré. Il est constitué comme suit :
- éventuellement, une information de référence d'abonné, sur 5 octets, pour identifier le bénéficiaire de l'abonnement au service,
- éventuellement, une référence de décodeur, sur 8 octets, pour distinguer entre eux les différents types de décodeurs et leurs versions de logiciel,
- éventuellement, un "identifiant audimétrique", sur 4 octets : il s'agit d'une suite binaire, variable de façon arbitraire dans le temps, transmise à travers le réseau de diffusion de télévision numérique et reçue sur le décodeur qui la transmet telle quelle à l'audimètre à des fins d'authentification ultérieure lors de l'exploitation des données collectées par cet audimètre au centre de traitement (par exemple pour vérifier que les audimètres sont bien connectés aux décodeurs),
- un identifiant de chaîne, sur 12 octets, se décomposant ainsi (on prendra ici, à titre d'exemple et sans caractère limitatif, le cas de la triade "Service_ID + Transport_stream_ID + Network_ID" de la spécification DVB) :
   - 4 octets codant la chaîne de programme ("Service_ID"),
   - 4 octets codant le multiplex numérique, c'est-à-dire permettant d'identifier la fréquence de la porteuse de transport amont ("Transport_stream_ID"), et
   - 4 octets codant éventuellement le réseau de transport amont d'origine ("Network_ID").
- un mot d'état du programme, sur 1 octet (voir ci-dessous), constitué d'indicateurs booléens indiquant par exemple :
   - si la chaîne est diffusée en clair ou cryptée,
   - celui des tuners (syntoniseurs), n° 1 ou 2, qui est à l'origine des signaux, si le décodeur possède deux tuners,
   - si le son est coupé ou non (fonction "mute"),
   - s'il s'agit d'un programme capté par le décodeur, ou bien provenant de la prise péritélévision n°1 si le décodeur est muni d'une telle prise,
   - s'il s'agit d'un programme capté par le décodeur, ou bien provenant de la prise péritélévision n°2 si le décodeur est muni d'une telle prise,
   - s'il s'agit d'un programme capté par le décodeur ou bien d'un menu généré localement,
   - s'il s'agit d'un programme visualisé en clair (programme non crypté ou programme crypté et décodé), ou bien d'un programme visualisé sous forme cryptée, correspondant à une situation qui ne doit pas être prise en compte dans une analyse audimétrique.
- éventuellement, une donnée d'horodatage, sur 4 octets,
- un numéro de message, sur 1 octet : il s'agit ici d'une valeur incrémentée modulo 128 à chaque émission d'un nouveau message par le logiciel audimétrique et permettant de vérifier au niveau de l'audimètre la
- bonne succession des messages envoyés par le décodeur,
- un motif ou "tag" de fin, sur 8 octets.

### Messages de type 2 : activité du décodeur

Le message de type 2 est émis une fois à chaque changement d'état du décodeur. Dans l'hypothèse de trois états différents (marche, arrêt et veille), ceci correspond à six transitions possibles, qui peuvent donc être codées sur trois bits.

Le message de type 2 a une longueur nominale de 40 octets, il est composé des données suivantes :
- le motif ou "tag" de début, sur 8 octets,
- l'identifiant de message, sur 1 octet, indiquant ici message de type 2,
- éventuellement, l'information de référence d'abonné, sur 5 octets,
- éventuellement, la référence de décodeur, sur 8 octets,
- éventuellement, l'identifiant audimétrique, sur 4 octets,
- l'état du décodeur, sur 1 octet (trois bits seulement étant utilisés) codant les six transitions possibles,
- éventuellement, la donnée d'horodatage, sur 4 octets,
- le numéro de message, sur 1 octet,
- le motif ou "tag" de fin, sur 8 octets.

## Revendications

1. Un procédé d'identification, par un dispositif utilisateur tel qu'un audimètre, d'une chaîne de télévision sélectionnée par un équipement, et comprenant une étape consistant à :
a) prélever au sein de l'appareil source une donnée numérique formant identifiant de chaîne,
procédé ***caractérisé en ce que**,*
ledit équipement étant un décodeur ou récepteur/décodeur numérique, il comprend la mise en oeuvre des étapes consistant à :
b) détecter un changement de la chaîne sélectionnée,
c) en cas de changement détecté, produire un message de données numérique comportant le nouvel identifiant de chaîne,
d) transmettre ce message au dispositif utilisateur, et
e) exploiter le message au sein du dispositif utilisateur, notamment à des fins statistiques.

2. Le procédé d'identification de la revendication 1, dans lequel les étapes a) à c) sont mises en oeuvre par des moyens logiciels internes au décodeur.

3. Le procédé d'identification de la revendication 2, dans lequel les moyens logiciels de mise en oeuvre des étapes a) à c) sont incorporés au logiciel de pilotage général du décodeur ou à son module de contrôle d'accès le cas échéant.

4. Le procédé d'identification de la revendication 1, dans lequel l'étape d) est mise en oeuvre via un port d'accès non spécifique du décodeur, notamment un port informatique série ou parallèle ou en dérivation sur le connecteur de carte à microcircuit.

5. Le procédé d'identification de la revendication 1, dans lequel on détecte un changement d'une condition d'accès à la chaîne sélectionnée et, à l'étape c), on produit un message d'accès comprenant un indicateur de condition d'accès, ou de transition de condition d'accès, correspondant.

6. Le procédé d'identification de la revendication 1, dans lequel on détecte également un changement d'état du décodeur entre états actif, en veille ou arrêté et, à l'étape c), on produit un message d'accès comprenant un indicateur d'état, ou de transition d'état, correspondant.

7. Le procédé d'identification de la revendication 5 ou 6, dans lequel, à l'étape c), on adjoint au message un préfixe identifiant le type de transition représentée par le message, soit changement d'état, soit autre transition.

8. Le procédé d'identification de la revendication 5 ou 6, dans lequel, à l'étape c), on inclut dans le message au moins une information du groupe comprenant : une référence d'abonné détenteur du décodeur ; une référence d'identification du décodeur ; une donnée de contrôle audimétrique transmise par le réseau et reçue par le décodeur ; une donnée d'horodatage ; et un numéro de message, incrémenté à chaque production d'un nouveau message par le décodeur.

9. Le procédé d'identification de la revendication 1, dans lequel l'identifiant de chaîne prélevé à l'étape a) inclut une donnée codant la chaîne de programme, une donnée codant le multiplex numérique et/ou une donnée codant le réseau de transport amont d'origine.

10. Un signal numérique d'identification de chaîne, émis par un équipement à destination d'un dispositif utilisateur tel qu'un audimètre, et comprenant un message de données numérique,
signal ***caractérisé en ce que**,*
ledit équipement étant un décodeur ou récepteur/décodeur numérique,
ledit message de données numérique comporte une information représentative d'une transition intervenue parmi les transitions du groupe comprenant : un changement de la chaîne sélectionnée par le décodeur ; un changement d'état du décodeur parmi états actif, en veille ou arrêté ; ou un changement de condition d'accès de la chaîne sélectionnée.

11. Le signal numérique de la revendication 10, comprenant en outre, avant le message, un préfixe identifiant le type de transition représentée par le message, soit changement d'état, soit autre transition.

12. Le signal numérique de la revendication 10, dans lequel le message comprend, en cas de changement de chaîne, un identifiant de chaîne correspondant à la nouvelle chaîne sélectionnée.

13. Le signal numérique de la revendication 12, dans lequel l'identifiant de chaîne inclut une donnée codant la chaîne de programme, une donnée codant le multiplex numérique et/ou une donnée codant le réseau de transport amont d'origine.

14. Le signal numérique de la revendication 10, dans lequel le message comprend en outre au moins une information du groupe comprenant : une référence d'abonné détenteur du décodeur ; une référence d'identification du décodeur ; une donnée de contrôle audimétrique transmise par le réseau et reçue par le décodeur ; une donnée d'horodatage ; et un numéro de message, incrémenté à chaque production d'un nouveau message par le décodeur.

## Patentansprüche

1. Identifizierungsverfahren durch eine Benutzervorrichtung wie z.B. einem Audiometer, von einem Fernsehsender, der durch eine Ausrüstung ausgewählt ist, und einen Schritt aufweist, bestehend aus:
a) Entnehmen numerischer Daten, die den Sender identifizieren innerhalb des Quellapparates,
wobei das Verfahren **dadurch gekennzeichnet ist, dass**
die Ausrüstung ein numerischer Dekoder oder Empfänger/Dekoder ist, der das Umsetzen von Schritten umfasst, bestehend aus:
b) Detektieren eines Wechsels des ausgewählten Senders,
c) im Fall eines detektierten Wechsels, Erzeugen einer Nachricht numerischer Daten, den neuen Identifizierer des Senders aufweisend,
d) Übertragen dieser Nachricht zur Benutzervorrichtung, und
e) Benutzen der Nachricht innerhalb der Benutzervorrichtung, insbesondere zu statistischen Zwecken.

2. Identifizierungsverfahren nach Anspruch 1, in welchem die Schritte a) bis c) durch interne Softwaremittel im Dekoder umgesetzt werden.

3. Identifizierungsverfahren nach Anspruch 2, in welchem die Softwaremittel eines Umsetzens der Schritte a) bis c) in der allgemeinen Steuersoftware des Dekoders oder gegebenenfalls in seinem Zugangssteuermodul eingebaut sind.

4. Identifizierungsverfahren nach Anspruch 1, in welchem der Schritt d) mittels einem nicht spezifischen Zugangsport des Dekoders, insbesondere einem seriellen oder parallelen Informatikport oder durch Umleitung über den Anschluss einer Mikro-Schaltkreiskarte umgesetzt wird.

5. Identifizierungsverfahren nach Anspruch 1, in welchem man einen Wechsel einer Zugangsbedingung zu dem ausgewählten Sender detektiert und bei Schritt c) man eine Zugangsnachricht erzeugt, aufweisend einen Identifizierer der Zugangsbedingung oder entsprechend des Übergangs der Zugangsbedingung.

6. Identifizierungsverfahren nach Anspruch 1, in welchem man auch einen Zustandswechsel des Dekoders zwischen aktiven Zuständen in Bereitschaft oder ausgeschaltet detektiert und in Schritt c) man eine Zugangsnachricht erzeugt, aufweisend einen Indikator eines Zustands oder entsprechend des Übergangs eines Zustands.

7. Identifizierungsverfahren nach Anspruch 5 oder 6, in welchem man in Schritt c) einen Präfix der Nachricht hinzufügt, der die Art des Übergangs, welcher durch die Nachricht dargestellt wird, identifiziert, sei es der Zustandswechsel, sei es ein anderer Übergang.

8. Identifizierungsverfahren nach Anspruch 5 oder 6, in welchem man in Schritt c) in der Nachricht mindestens eine Information der Gruppe einschließt, aufweisend: Eine Referenz eines Inhaber-Abonnenten des Dekoders; eine Identifizierungsreferenz des Dekoders; audiometrische Steuerdaten, welche durch das Netz übertragen werden und durch den Dekoder empfangen werden; Daten eines Zeitautomaten; und eine Nachrichtennummer, welche bei jeder Herstellung einer neuen Nachricht durch den Dekoder inkrementiert wird.

9. Identifizierungsverfahren nach Anspruch 1, in welchem der in Schritt a) vorabgenommene Sender-Identifizierer Daten umfasst, welche den Programmsender kodieren, Daten, welche den numerischen Multiplex kodieren und/oder Daten, welche das ursprüngliche Zuliefer-Übertragungsnetz kodieren.

10. Numerisches Sender-Identifizierungssignal, das durch eine Ausrüstung mit Ziel einer Benutzervorrichtung, wie z.B. einem Audiometer, ausgesendet wird, und eine Nachricht numerischer Daten aufweist,
wobei das Signal **dadurch gekennzeichnet ist, dass**
die Ausstattung ein Dekoder oder numerischer Empfänger/Dekoder ist,
wobei die Nachricht numerischer Daten eine Information aufweist, die repräsentativ für einen Übergang ist, der auftritt unter den Übergängen der Gruppe aufweisend: ein Wechsel des ausgewählten Senders durch den Dekoder; ein Zustandswechsel des Dekoders unter aktiven Zuständen, in Bereitschaft oder ausgeschaltet; oder ein Wechsel der Zugangsbedingung des ausgewählten Senders.

11. Numerisches Signal gemäß Anspruch 10, aufweisend des Weiteren vor der Nachricht ein Präfix, der die Art der Übertragung, welche durch die Nachricht repräsentiert wird, identifiziert, sei es der Zustandswechsel, sei es ein anderer Übergang.

12. Numerisches Signal gemäß Anspruch 10, in welchem im Fall eines Wechsels eines Senders die Nachricht einen Sender-Identifizierer entsprechend zu dem neuen ausgewählten Sender aufweist.

13. Numerisches Signal gemäß Anspruch 12, in welchem der Sender-Identifizierer Daten umfasst, welche den Programmsender kodieren, Daten, welche den numerischen Multiplex kodieren und/oder Daten, welche das ursprüngliche Zuliefer-Übertragungsnetz kodieren.

14. Numerisches Signal gemäß Anspruch 10, in welchem die Nachricht des Weiteren mindestens eine Information der Gruppe umfasst, aufweisend: Eine Referenz des Abonnenten-Inhabers des Dekoders; eine Identifizierungsreferenz des Dekoders; audiometrische Steuerdaten, die durch das Netz übertragen und durch den Dekoder empfangen werden; Daten eines Zeitautomaten; und eine Nummer einer Nachricht, welche bei jeder Herstellung einer neuen Nachricht durch den Dekoder inkrementiert wird.

## Claims

1. A method for identifying, by a user device such as an audience meter, a television channel selected by an equipment, and including a step consisting in:
a) taking from within the source device digital data forming a channel identifier;
said method being ***characterized in that**,*
said equipment being a digital decoder or receiver/decoder, it comprises the implementation of the steps consisting in:
b) detecting a change in the selected channel;
c) when a change is detected, producing a digital data message including the new channel identifier;
d) transmitting the message to the user device; and
e) making use of the message within the user device, in particular for statistical purposes.

2. The identification method of claim 1, in which steps a) to c) are implemented by software means internal to the decoder.

3. The identification method of claim 2, in which the software means implementing steps a) to c) are incorporated in the general control software of the decoder or in its access control module, where applicable.

4. The identification method of claim 1, in which step d) is implemented via a non-specific access port of the decoder, in particular a computer serial or parallel port, or in parallel on the microcircuit card connector.

5. The identification method of claim 1, in which a change in an access condition to the selected channel is detected, and in step c), an access message is produced including an access condition indicator, or a corresponding access condition transition indicator.

6. The identification method of claim 1, in which a change of state of the decoder is also detected between the active, standby, and off states, and in step c), an access message is produced including a state indicator or a corresponding state transition indicator.

7. The identification method of claim 5 or claim 6, in which, in step c), a prefix is added to the message identifying the type of transition represented by the message, either a change in state or some other transition.

8. The identification method of claim 5 or claim 6, in which, in step c), the message includes at least one piece of information taken from the group comprising: a reference for the subscriber holding the decoder; a reference identifying the decoder; audience metering verification data transmitted over the network and received by the decoder; time and date information; and a message number which is incremented each time a new message is produced by the decoder.

9. The identification method of claim 1, in which the channel identifier taken in step a) includes data encoding the program channel, data encoding the digital multiplex, and/or data encoding the originating upstream transport network.

10. A digital signal for identifying a channel, issued by an equipment to a user device such as an audience meter, and including a digital data message,
said signal being ***characterized in that**,*
said equipment being a digital decoder or receiver/decoder,
said digital data message includes information representative of a transition that has occurred amongst the transitions taken from the group comprising: a change of channel selected by the decoder; a change of decoder state amongst the active, standby, and off states; and a change of access condition to the selected channel.

11. The digital signal of claim 10, further comprising, before the message, a prefix identifying the type of transition represented by the message, either a change of state, or other transition.

12. The digital signal of claim 10, in which the message comprises, when there is a change of channel, a channel identifier corresponding to the newly selected channel.

13. The digital signal of claim 12, in which the channel identifier includes data encoding the program channel, data encoding the digital multiplex and/or data encoding the originating upstream transport network.

14. The digital signal of claim 10, in which the message further comprises at least one piece of information from the group comprising: a reference for the subscriber holding the decoder; a reference identifying the decoder; audience metering verification data transmitted by the network and received by the decoder; time and date data; and a message number which is incremented each time a new message is produced by the decoder.
